# EUROPÄISCHE PATENTSCHRIFT

(11) **EP 3 401 588 B1**
(45) Veröffentlichungstag und Bekanntmachung des Hinweises auf die Patenterteilung: **01.07.2020**
(21) Anmeldenummer: 18171734.9
(22) Anmeldetag: 11.05.2018
(51) Int. Cl.: F21S 8/04, G02B 19/00, F21V 5/00, F21S 4/20

(54) **INNEN- ODER AUSSENLEUCHTE MIT EINER BLENDARMEN LICHTAUSTRITTSFLÄCHE**
INTERNAL OR EXTERNAL LIGHT WITH A LOW GLARE LIGHT EMITTING SURFACE
LUMINAIRE INTERNE OU EXTERNE DOTÉ D'UNE SURFACE DE SORTIE DE LUMIÈRE ANTIREFLET

(30) Priorität: 12.05.2017 DE 102017110428
(43) Veröffentlichungstag der Anmeldung: 14.11.2018
(73) Patentinhaber: Occhio GmbH, 81667 München (DE)
(72) Erfinder: Wolfram, Stefan, 81479 München (DE)
(74) Vertreter: Soria Parra, Manuel

(56) Entgegenhaltungen:
- EP-A1- 2 083 212
- EP-A1- 2 827 050
- EP-A1- 3 056 805
- WO-A1-2009/109387
- WO-A1-2012/147653
- JP-A- 2010 267 598

## Beschreibung

Die Erfindung betrifft eine Innen- oder Außenleuchte, insbesondere eine Deckenleuchte oder Hängeleuchte, gemäß dem Oberbegriff des Patentanspruchs 1. Eine derartige Leuchte ist beispielsweise aus DE 20 2016 002 197 U1 bekannt.

Moderne Leuchten nutzen vielfach Leuchtdioden als Leuchtmittel, um einerseits eine hohe Energieeffizienz und andererseits eine hohe Gestaltungsvielfalt zu erreichen. Leuchtdioden, die sich durch ihre kompakte Bauweise und ihre geringe Wärmestrahlung auszeichnen, eröffnen neue Möglichkeiten für das Design von Wohnraumleuchten. Beispielsweise können, wie in DE 20 2016 002 197 U1 vorgeschlagen wird, mehrere Leuchtdioden in einer Reihe angeordnet werden, so dass sich ein Leuchtdiodenband bzw. ein LED-Streifen bildet.

Die in Reihe angeordneten Leuchtdioden weisen sind in einer Längsnut des Leuchtengehäuses eingesetzt. Um eine gerichtete Lichtverteilung zu erreichen, weist die bekannte Leuchte außerdem ein Lichtlenkelement auf, das ebenfalls in der Längsnut angeordnet ist und die Leuchtdioden abdeckt. Das Lichtlenkelement umfasst eine Lichteintrittsfläche, die den Leuchtdioden zugewandt ist.

Bei Leuchten, deren Leuchtmittel sich in einer Reihe erstrecken, besteht grundsätzlich das Problem der Blendung. Denn durch die linear hintereinander angeordneten Leuchtdioden erfolgt üblicherweise eine Abstrahlung wenigstens einer Leuchtdiode in einen solchen Winkel, dass Personen die ihren Blick parallel zum LED-Streifen gerichtet haben, durch Streulicht einer der Leuchtdioden geblendet werden.

Ein weiterer Nachteil bekannter Leuchten mit LED-Streifen und einem Lichtlenkelement besteht darin, dass im eingeschalteten Zustand der Leuchte die einzelnen Leuchtdioden als punktförmige Lichtquellen erkennbar sind. Dies ist aus ästhetischen Gründen unerwünscht.

Eine LEDs einsetzende längliche Leuchte mit einer Lichtaustrittsöffnung, die runde, im Wesentlichen kugelförmige Linsen aufweist, welche die LEDs domartig überspannen, ist beispielsweise aus der EP 3 056 805 A1 bekannt.

Der Erfindung liegt die Aufgabe zu Grunde, eine Innen- oder Außenleuchte mit einer besonders gleichmäßigen und klaren Lichtverteilung anzugeben, die einen möglichst geringen Blendeffekt aufweist und optisch ansprechend ist.

Erfindungsgemäß wird diese Aufgabe durch den Gegenstand des Patentanspruchs 1 gelöst. Weitere Merkmale der Erfindung sind in den Unteransprüchen angegeben.

So beruht die Erfindung auf dem Gedanken, eine Innen- oder Außenleuchte, insbesondere eine Decken- oder Hängeleuchte, mit einem Leuchtengehäuse anzugeben, das wenigstens eine Längsnut aufweist. In die Längsnut sind mehrere in Reihe angeordnete Leuchtdioden und ein Lichtlenkelement aufgenommen, das sich über die Leuchtdioden erstreckt. Ferner weist das Lichtlenkelement eine den Leuchtdioden zugewandte Lichteintrittsfläche und eine Lichtaustrittsfläche auf. Die Erfindung zeichnet sich dadurch aus, dass die Lichteintrittsfläche und/oder die Lichtaustrittsfläche eine Wellenstruktur mit regelmäßig angeordneten Wellen umfasst. Die Wellen erstrecken sich vorzugsweise parallel zueinander und orthogonal zur Längsnut.

Die an der Lichteintrittsfläche und/oder Lichtaustrittsfläche des Lichtlenkelements angeordnete Wellenstruktur hat mehrere Vorteile. Einerseits erhöht die Wellenstruktur die Ästhetik der Innen- oder Außenleuchte, da auf diese Weise das aus dem Lichtlenkelement, insbesondere über die Lichtaustrittsfläche, ausgekoppeltes Licht derart gestreut wird, dass die hinter dem Lichtlenkelement angeordnete Leuchtdiode als solche nicht mehr erkennbar ist. Mit anderen Worten wird vermieden, dass ein Betrachter bei eingeschalteter Leuchte einzelne Leuchtdioden als Lichtpunkte erkennt.

Die erfindungsgemäße Wellenstruktur verändert den Strahlengang des von den Leuchtdioden ausgestrahlten Lichts derart, dass der Eindruck entsteht, die Innen- oder Außenleuchte würde ein flächiges Leuchtmittel aufweisen. Dieser Effekt tritt insbesondere auch dann ein, wenn nur jede zweite Leuchtdiode aktiviert ist. Mit anderen Worten wird mit der Wellenstruktur eine derartige Lichtstreuung erreicht, dass auch voneinander beabstandet angeordnete Leuchtdioden im eingeschalteten Zustand der Leuchte nicht als einzelne punktförmige Lichtquellen wahrnehmbar sind. Insgesamt verbessert dies die Ästhetik der Innen- oder Außenleuchte und erhöht damit ihren Wert als hochwertig gestaltetes Wohnraumaccessoire.

Überraschend hat sich ein weiterer Vorteil der Wellenstruktur an der Lichteintrittsfläche und/oder Lichtaustrittsfläche gezeigt. Die Wellenstruktur sorgt nicht nur für eine verbesserte Ästhetik der Leuchte, sondern reduziert auch Blendeffekte. Die Wellenstruktur des Lichtlenkelements überlagert und streut die Strahlengänge der einzelnen Leuchtdioden derart, dass eine, insbesondere bei LED-Streifen auftretende, Blendwirkung signifikant reduziert wird. Konkret wird hauptsächlich eine Längsentblendung bzw. eine Entblendung in Richtung der Längsachse der Leuchte bzw. des LED-Streifens bewirkt. Die Funktionalität und Einsetzbarkeit der Leuchte wird damit deutlich verbessert.

In diesem Zusammenhang wird darauf hingewiesen, dass sich die vorliegende Anmeldung auf Innen- oder Außenleuchten beziehen, die insbesondere stationär angeordnet sind. Der Begriff "Außenleuchte" ist insbesondere so zu verstehen, dass davon Signalleuchten oder sonstige Beleuchtungseinrichtungen an Kraftfahrzeugen, beispielsweise Rückleuchten, Seitenleuchten oder Fahrzeugscheinwerfer, nicht erfasst sind.

Bei einer bevorzugten Variante der erfindungsgemäßen Innen- oder Außenleuchte ist die Wellenstruktur so dimensioniert, dass der Lichtschwerpunkt einzelner Leuchtdioden exzentrisch verschoben ist. Leuchtdioden strahlen Licht üblicherweise in einer Kegelform ab. Der Bereich um den Schnittpunkt der Rotationsachse des Lichtkegels mit einer beleuchteten Ebene bildet im Wesentlichen den Lichtschwerpunkt. Im Lichtschwerpunkt weist der Lichtkegel die höchste Lichtintensität bzw. Helligkeit auf. Vorteilhaft ist es nun, wenn der Abstrahlwinkel der jeweiligen Leuchtdiode, der Abstand zwischen der Leuchtdiode und der Lichteintrittsfläche, der Abstand zwischen der Lichteintrittsfläche und der Lichtaustrittsfläche sowie die Höhe und Dichte der Wellenstruktur so aufeinander abgestimmt sind, dass der Lichtschwerpunkt aus der Rotationsachse des Lichtkegels verschoben ist. Nachdem dies für alle Leuchtdioden, die in Reihe angeordnet sind, durch die Wellenstruktur umgesetzt wird, ergibt sich insgesamt eine Streuung, die zu einer minimalen Blendwirkung für einen Betrachter führt.

Weiter bevorzugt ist es, wenn das Lichtlenkelement von den Leuchtdioden derart beabstandet angeordnet ist, dass über die Lichteintrittsfläche in das Lichtlenkelement eingekoppeltes Licht an Seitenflächen des Lichtlenkelements total reflektiert wird. Dies erhöht die Lichtausbeute einzelner Leuchtdioden, so dass insgesamt mit geringem Energieaufwand eine hohe Lichtleistung erzielt wird.

Eine besondere Weiterbildung der erfindungsgemäßen Innen- oder Außenleuchte sieht vor, dass die Lichteintrittsfläche und/oder die Lichtaustrittsfläche eine linsenförmige, insbesondere lichtbündelnde, Wölbung aufweist. Die Krümmungsachse der Wölbung ist vorzugsweise parallel zur Längsnut ausgerichtet. Konkret kann die Krümmungsachse der Wölbung jeweils orthogonal zu den Wellen der Wellenstruktur ausgerichtet sein.

Eine derart gewölbte Lichtaustrittsfläche ermöglicht es beispielsweise, das abgestrahlte Licht zu bündeln und so eine hohe Lichtintensität auf kleiner Fläche zu erreichen. Insofern ist eine derartige Gestaltung des Lichtlenkelements insbesondere für Deckenleuchten, die üblicherweise einen großen Abstand zu der zu beleuchtenden Fläche aufweisen, besonders vorteilhaft. Dieser Effekt kann unterstützt werden, indem das Lichtlenkelement eine gewölbte Lichteintrittsfläche aufweist, so dass bereits beim Eintritt des von der Leuchtdiode emittierten Lichts eine Bündelung erfolgt. Damit wird es auch möglich, den Abstand zwischen der Leuchtdiode und dem Lichtlenkelement zu verringern, wodurch insgesamt die Innen- oder Außenleuchte kompakter gestaltet werden kann.

Das Lichtlenkelement ist vorzugsweise in die Längsnut des Leuchtengehäuses eingepasst. Mit anderen Worten ist vorgesehen, dass die Längsnut des Leuchtengehäuses vollständig durch das Lichtlenkelement verschlossen ist. Dies kommt der Ästhetik der Leuchte zugute und vermeidet eine Verschmutzung der Leuchtdioden. Vorzugsweise ist das Lichtlenkelement vollständig in die Längsnut versenkt.

Das Lichtlenkelement kann seitlich, insbesondere an den Seitenflächen, jeweils eine Positionierkontur aufweisen. Das Leuchtengehäuse kann ferner eine Haltekontur umfassen. Die Haltekontur kann insbesondere in der Längsnut ausgebildet sein. Vorzugsweise ist die Positionierkontur formschlüssig mit der Haltekontur des Leuchtengehäuses verbunden oder verbindbar.

Die Positionierkontur erleichtert, insbesondere im Zusammenspiel mit der Haltekontur am Leuchtengehäuse, die Montage des Lichtlenkelements im Leuchtengehäuse. Insbesondere kann durch die Positionierkontur eine definierte Position des Lichtlenkelements vorgegeben werden, so dass die gewünschte Lichtabstrahlcharakteristik auch innerhalb einer Produktserie auf einem einheitlich hohen Standard gehalten werden kann.

Ferner ist es bevorzugt, wenn das Lichtlenkelement aus einem flexiblen Material, insbesondere einem optischen Silikon, gebildet ist. Das flexible Material ermöglicht eine einfache Montage, insbesondere bei Leuchtengehäusen, die eine gekrümmte Form aufweisen. Außerdem können mittels der flexiblen Eigenschaften des Lichtlenkelements Herstellungsungenauigkeiten im Rahmen der Toleranzen des Leuchtengehäuses ausgeglichen werden.

Bei einer erfindungsgemäßen Innen- oder Außenleuchte weist die Längsnut eine Bodenfläche und zwei Wandflächen auf. Die Bodenfläche ist unterhalb der Leuchtdioden mit einer lichtabsorbierenden, insbesondere schwarzen, Schicht ausgestattet. Alternativ oder zusätzlich ist vorgesehen, dass die Wandflächen zumindest unterhalb des Lichtlenkelements mit einer lichtabsorbierenden, insbesondere schwarzen, Schicht ausgestattet sind. Auf diese Weise wird vermieden, dass durch unerwünschte Reflexion an der Bodenfläche oder den Wandflächen Strahlengänge ermöglicht werden, die zu einer Blendwirkung für einen Betrachter der Leuchte führen. Die Auskleidung bzw. Ausstattung der Bodenfläche und/oder der Wandflächen mit einer lichtabsorbierenden Schicht vermeidet derartige Reflexionseffekte, die andernfalls auch zu einer Erkennbarkeit einzelner Lichtpunkte führen könnte. Bevorzugt ist es, wenn die Wandflächen wenigstens im Bereich zwischen der Bodenfläche und dem Lichtlenkelement mit einer lichtabsorbierenden Schicht ausgestattet sind. Es ist jedoch auch möglich, dass sich die lichtabsorbierende Schicht bis in den Bereich des Lichtlenkelements erstreckt.

Die erfindungsgemäße Innen- oder Außenleuchte kann in bevorzugten Varianten mehrere Leuchtdioden mit einer ersten Farbtemperatur und mehrere Leuchtdioden mit einer zweiten Farbtemperatur aufweisen. Vorzugsweise sind Leuchtdioden unterschiedlicher Farbtemperatur abwechselnd in Reihe zueinander angeordnet, so dass sich die Lichtkegel der Leuchtdioden unterschiedlicher Farbtemperatur überlappen. Beispielsweise kann jede zweite Leuchtdiode mit einer kaltweißen Farbtemperatur (z.B. 4000 Kelvin) und die jeweils dazwischen angeordnete Leuchtdiode mit einer warmweißen Farbtemperatur (z.B. 2700 Kelvin) ausgestattet sein. Auf diese Weise ist es möglich, unterschiedliche Lichtstimmungen mit derselben Innen- oder Außenleuchte zu realisieren.

In der Längsnut des Leuchtengehäuses kann außerdem ein Infrarotsensor angeordnet sein. In diesem Fall ist es bevorzugt, wenn das Lichtlenkelement eine Durchgangsöffnung aufweist, die mit dem Infrarotsensor fluchtet. Mit anderen Worten kann die Durchgangsöffnung so angeordnet sein, dass freie Sicht auf den Infrarotsensor möglich ist. Damit ist sichergestellt, dass von dem Infrarotsensor abgestrahltes Infrarotlicht bei Reflexion an den Infrarotsensor zurückgelangt. Dabei kann die Durchgangsöffnung als Lichttunnel wirken, wobei an den Außenwänden der Durchgangsöffnung zumindest teilweise eine Totalreflexion der Infrarotlichtstrahlen eintritt.

Vorzugsweise sind der Infrarotsensor und die Leuchtdioden mit einer Steuereinrichtung gekoppelt. Die Steuereinrichtung kann so konfiguriert sein, dass die Farbtemperatur und/oder die Intensität des aus dem Lichtlenkelement ausgekoppelten Lichts berührungslos einstellbar ist. Durch den Infrarotsensor kann beispielsweise eine Hand eines Benutzers erkannt werden. Die Erkennung einer Hand eines Benutzers kann wiederum mittels der Steuereinrichtung in einen Steuerbefehl für die Leuchtdioden umgesetzt werden. Beispielsweise kann durch kurze Erkennung einer Wärmequelle, wie beispielsweise der Hand des Benutzers, ein Ein- oder Ausschaltsignal an die Leuchtdioden gesendet werden. Bei längerer Erkennung einer Wärmequelle können andere Funktionen der Leuchtdioden, beispielsweise eine Dimmung der Leuchtdioden, ausgelöst werden. Im Ergebnis ermöglicht die Kombination eines Infrarotsensors mit einer entsprechend konfigurierten Steuereinrichtung eine Gestensteuerung der Leuchte.

Die Gestensteuerung der Leuchte ist insbesondere besonders vorteilhaft mit stufenlos dimmbaren Leuchtdioden kombinierbar, die mit der Steuereinrichtung verbunden sind. Insofern ist es bevorzugt, wenn die Steuereinrichtung so konfiguriert ist, dass durch Dimmen der Leuchtdioden die Farbtemperatur und/oder die Intensität des aus dem Lichtlenkelement ausgekoppelten Lichts stufenlos änderbar ist. So können Leuchtdioden mit einer ersten Farbtemperatur und Leuchtdioden mit einer zweiten Farbtemperatur wechselseitig heller oder dunkler gedimmt werden, so dass durch Überlagerung der Farbtemperaturen eine stufenlose Einstellbarkeit der Farbtemperatur erreicht wird.

Die Farbtemperatur-Grenzen der stufenlosen Einstellbarkeit werden durch die Farbtemperatur der einzelnen Leuchtdioden bestimmt. Insbesondere kann die Farbtemperatur in einem Bereich zwischen der Farbtemperatur der Leuchtdiode mit der niedrigsten Farbtemperatur und der Farbtemperatur der Leuchtdiode mit der höchsten Farbtemperatur stufenlos verstellt werden. Ebenso können die Leuchtdioden, auch wenn sie unterschiedliche Farbtemperaturen aufweisen, zeitgleich gedimmt werden, um die Intensität des aus dem Lichtlenkelement ausgekoppelten Lichts stufenlos anzupassen.

Das Leuchtengehäuse weist vorzugsweise ein H-förmiges Querschnittsprofil mit zwei gegenüberliegenden Längsnuten auf. Eine derartige Gestaltung des Leuchtengehäuses eignet sich insbesondere für die Nutzung der Leuchte als Hängeleuchte. Dabei kann es insbesondere bevorzugt sein, dass die Längsnuten jeweils mehrere Leuchtdioden und jeweils ein Lichtlenkelement aufnehmen, so dass eine Lichtabstrahlung in unterschiedliche, insbesondere um 180 Grad versetzte, Richtungen erfolgt. Bei einer Hängeleuchte ist dieser Vorteil besonders gut ersichtlich. Durch den beidseitigen Lichtaustritt kann eine gezielte Beleuchtung eines Tisches nach unten erfolgen und gleichzeitig eine indirekte Ambiente-Beleuchtung durch Abstrahlung von Licht nach oben. Dabei können die Leuchtdioden, die in den unterschiedlichen Längsnuten angeordnet sind, getrennt voneinander ansteuerbar sein. Auf diese Weise kann die Lichtintensität des nach oben abgestrahlten Lichts von der Lichtintensität des nach unten abgestrahlten Lichts unabhängig voneinander eingestellt werden. Die Lichtcharakteristik der Leuchte kann so individuell auf unterschiedliche Umgebungsbedingungen abgestimmt werden.

Im Hinblick auf die ästhetische Gestaltung der Innen- oder Außenleuchte ist es bevorzugt, wenn das Leuchtengehäuse als geöffneter Ring oder als gerader Balken ausgebildet ist. Die Verwendung eines Leuchtengehäuses als geöffneter Ring ermöglicht die im Wesentlichen kreisförmige Ausleuchtung von Flächen. Für die Ausleuchtung länglicher Flächen, beispielsweise Rechteckflächen mit einem hohen Seitenverhältnis, eignet sich hingegen eine lineare Gestaltung des Leuchtengehäuses als gerader Balken. Beide Leuchtenarten können auch in einem Raum miteinander kombiniert werden. Insofern ist es auch ästhetischen Gründen vorteilhaft, dass die ringförmige Variante des Leuchtengehäuses als Ring mit einer Öffnung ausgebildet ist. Im Wesentlichen wird damit das Design des geraden Balkens aufgegriffen, der jedoch zu einem nicht geschlossenen Ring gebogen ist. Die balkenartige Grundform bleibt also bei der ringförmigen Variante bestehen, so dass sich die Designphilosophie in beiden Varianten des Leuchtengehäuses widerspiegelt.

Die Erfindung wird im Folgenden anhand von Ausführungsbeispielen unter Bezugnahme auf die beigefügten Zeichnungen näher erläutert. Darin zeigen
- Fig. 1: eine Querschnittsansicht einer Anordnung aus einer Leuchtdiode und einem Lichtlenkelement einer erfindungsgemäßen Innen- oder Außenleuchte gemäß einem bevorzugten Ausführungsbeispiel zur Illustration des Lichtstrahlengangs;
- Fig. 2: eine Querschnittsansicht einer Anordnung aus einer Leuchtdiode und einem Lichtlenkelement einer erfindungsgemäßen Innen- oder Außenleuchte nach einem weiteren bevorzugten Ausführungsbeispiel zur Illustration des Lichtstrahlengangs;
- Fig. 3: eine Längsschnittansicht durch eine Lichtaustrittsfläche eines Lichtlenkelements einer erfindungsgemäßen Innen- oder Außenleuchte gemäß den Ausführungsbeispielen nach Fig. 1 und 2 zur Illustration des Lichtstrahlengangs;
- Fig. 4: eine Querschnittsansicht durch eine erfindungsgemäße Innen- oder Außenleuchte nach einem bevorzugten Ausführungsbeispiel mit zwei gegenüberliegenden Lichtaustrittsflächen;
- Fig. 5: eine Draufsicht auf die Innen- oder Außenleuchte gemäß Fig. 4 ohne ein Lichtlenkelement; und
- Fig. 6: eine Untersicht der Innen- oder Außenleuchte gemäß Fig. 4 und 5 mit Lichtlenkelement.

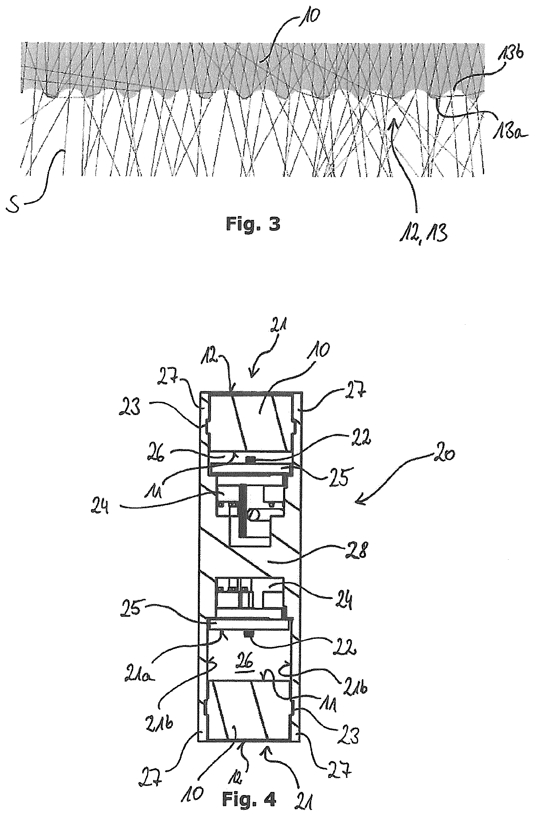

In den Fig. 4-6 ist ein bevorzugtes Ausführungsbeispiel einer Innen- oder Außenleuchte gezeigt, wobei die Innen- oder Außenleuchte nachfolgend allgemein als Leuchte bezeichnet wird. Es wird darauf hingewiesen, dass im Rahmen der vorliegenden Anmeldung auf Wohnraumleuchten Bezug genommen wird. Fahrzeugleuchten, die eine Signalfunktion haben, sind ebenso wie Fahrzeugscheinwerfer von dem Begriff Leuchten im Rahmen dieser Anmeldung nicht umfasst.

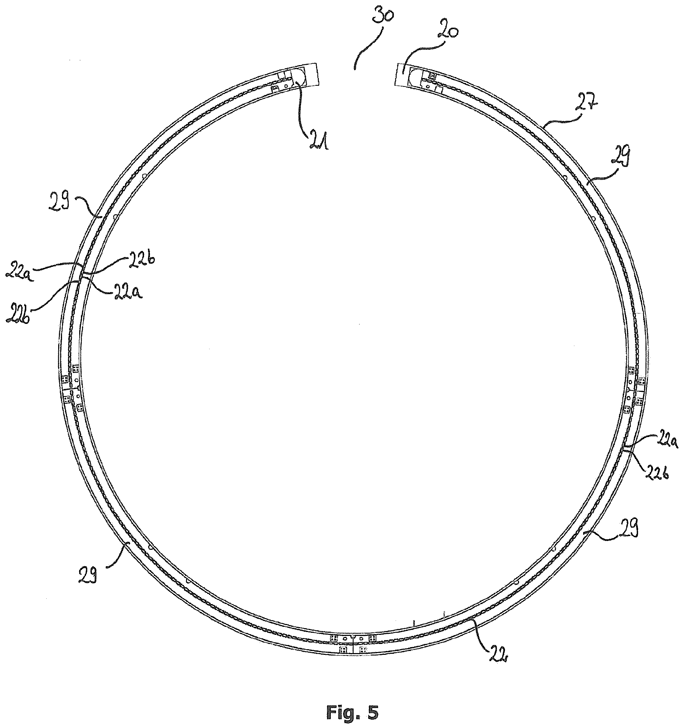

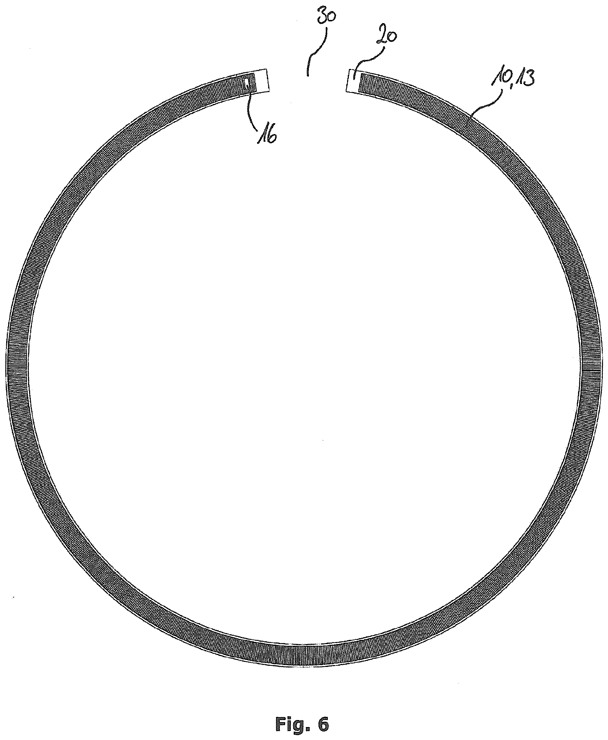

Bei dem Ausführungsbeispiel gemäß Fig. 4-6 ist vorgesehen, dass die Leuchte insgesamt als geöffneter Ring geformt ist. Im Wesentlichen beschreibt die Leuchte also eine Kreisform bzw. Teilkreisform mit einem Spalt 30. Der Spalt 30 weist vorzugsweise eine Breite auf, die im Wesentlichen einen Winkel von 10 bis 20° bezogen auf den Ringmittelpunkt überdeckt. Die Erfindung ist auf eine derartige Gestaltung der Leuchte nicht eingeschränkt. Vielmehr ist es auch denkbar, die Leuchte linear auszubilden, also im Wesentlichen als geradliniger Balken zu formen. Konkret könnte der geöffnete Ring gemäß Fig. 5 und 6 in eine Ebene ausgebreitet werden, so dass sich insgesamt eine geradlinige Leuchte ergibt.

Die Leuchte gemäß Fig. 4-6 ist vorzugsweise als Hängeleuchte einzusetzen. Insofern ist es bevorzugt, dass, wie in Fig. 4 erkennbar ist, zwei Lichtaustrittsflächen 12 vorliegen, so dass eine Lichtabstrahlung nach oben und nach unten möglich ist. Da eine derartige Hängeleuchte vergleichsweise nah über der auszuleuchtenden Fläche, beispielsweise einem Tisch, angeordnet werden kann, ist hier eine andere Lichtabstrahlcharakteristik gewünscht, als dies bei einer Deckenleuchte der Fall ist, deren Abstand zur ausleuchtenden Fläche, beispielsweise einem Fußboden üblicherweise größer ist. Zusätzlich ist es für eine Deckenleuchte, also eine Leuchte, die unmittelbar an der Decke montiert wird, ausreichend, wenn eine einzige Lichteintrittsfläche 11 vorliegt, so dass Licht nach unten abgestrahlt wird.

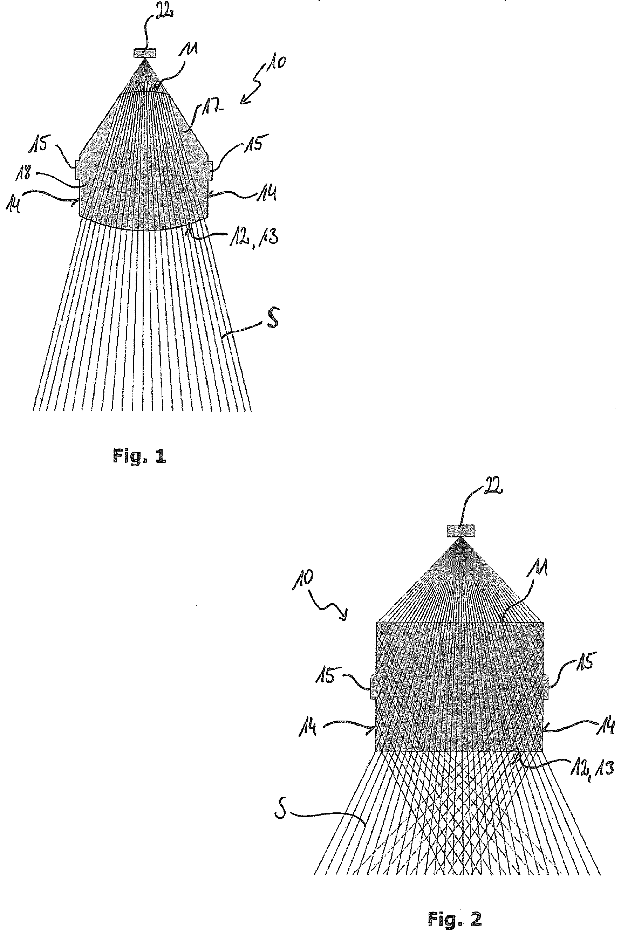

In den Fig. 1 und 2 sind beispielhaft zwei unterschiedliche Geometrien für Lichtlenkelemente 10 dargestellt, wobei das Ausführungsbeispiel gemäß Fig. 1 für ein Deckenleuchtenvariante und das Ausführungsbeispiel gemäß Fig. 2 für eine Hängeleuchtenvariante bevorzugt ist. Bei einer Deckenleuchte ist es zweckmäßig, das von dem Lichtlenkelement 10 abgestrahlte Licht möglichst eng zu bündeln, um eine ausreichende Lichtintensität zu erreichen. Auf diese Weise ist sichergestellt, dass eine ausreichend helle Ausleuchtung erfolgt.

Mit dem Lichtlenkelement 10 gemäß Fig. 1 wird eine hohe Lichtintensität erreicht und gleichzeitig ein gerichteter Lichtstrahl erzeugt, so dass eine Blendwirkung vermieden wird. Das Lichtlenkelement 10 weist dazu im Querschnitt einen trapezförmigen Abschnitt 17 und einen rechteckförmigen Abschnitt 18 auf. Der trapezförmige Abschnitt 17 ist einer Leuchtdiode 22 zugewandt, die von dem Lichtlenkelement 10 beabstandet angeordnet ist.

Das Lichtlenkelement 10, das grundsätzlich länglich ausgebildet ist, verläuft im Wesentlichen parallel zu mehreren Leuchtdioden 22. Konkret sind in dem Leuchtengehäuse 20 einer erfindungsgemäßen Leuchte mehrere Leuchtdioden 22 in einer Reihe hintereinander angeordnet und werden von dem Lichtlenkelement 10 überdeckt. Das Lichtlenkelement 10 ist dabei vorzugsweise mit gleichbleibendem Abstand zu den Leuchtdioden 22 bzw. einem LED-Streifen angeordnet, der durch die Reihe von Leuchtdioden gebildet ist.

Das Lichtlenkelement 10 weist im Allgemeinen eine Lichteintrittsfläche 11 auf, die den Leuchtdioden 22 zugewandt ist. Die Lichteintrittsfläche 11 ist bei dem Ausführungsbeispiel gemäß Fig. 1 am trapezförmigen Abschnitt 17 ausgebildet. Ferner ist die Lichteintrittsfläche 11 bei dem Ausführungsbeispiel gemäß Fig. 1 mit einer Krümmung versehen, so dass das von der Leuchtdiode 22 abgestrahlte Licht beim Eintritt in das Lichtlenkelement 10 gebündelt wird. Die Lichtstrahlen S verlaufen durch das Lichtlenkelement 10 im Wesentlichen gerichtet, d.h. mit wenig Streuverlust. Insbesondere durchlaufen die Lichtstrahlen S den trapezförmigen Abschnitt 17 und den rechteckförmigen Abschnitt 18 und treffen auf eine Lichtaustrittsfläche 12. Die Lichtaustrittsfläche 12 ist am rechteckförmigen Abschnitt 18 ausgebildet.

Die Lichtaustrittsfläche 12 weist bei dem Ausführungsbeispiel gemäß Fig. 1 ebenfalls eine Krümmung bzw. Wölbung auf, die einen lichtbündelnden Effekt hat. Konkret bilden die Lichteintrittsfläche 11 und die Lichtaustrittsfläche 12 mit ihrer Wölbung im Wesentlichen eine konvex geformte Sammellinse. Der Abstand zwischen dem Lichtlenkelement 10 und den Leuchtdioden 22 bzw. dem LED-Streifen ist vorzugsweise an den Abstrahlwinkel der einzelnen Leuchtdioden 22 so angepasst, dass das von der Leuchtdiode 22 abgestrahlte Licht nahezu vollständig in das Lichtlenkelement 10 eingekoppelt wird.

Die Lichtaustrittsfläche 12 weist ferner eine Wellenstruktur 13 auf, deren Geometrie und Funktion nachfolgend mit Bezug auf Fig. 3 näher erläutert wird. Die Wellenstruktur 13 überlagert im Wesentlichen die Wölbung der Lichtaustrittsfläche 12 bei dem Ausführungsbeispiel gemäß Fig. 1. Im Allgemeinen wird darauf hingewiesen, dass die Wölbungen der Lichteintrittsfläche 11 und der Lichtaustrittsfläche 12 jeweils quer zu einer Längsrichtung des Lichtlenkelements 10 verlaufen. Im Wesentlichen weist die Wölbung, die sich entlang des gesamten Lichtelements 10 erstreckt, eine Krümmungsachse auf, die parallel zur Längserstreckung des Lichtlenkelements 10 verläuft.

Das Lichtlenkelement 10 gemäß Fig. 2, welches für Hängeleuchten vorgesehen ist, sorgt für eine Auffächerung des abgestrahlten Lichts. Damit kann eine vergleichsweise große Fläche beleuchtet werden; eine Bündelung wie bei einer Deckenleuchte ist dabei unerwünscht. Dazu weist das Lichtlenkelement 10 im Wesentlichen eine rechteckförmige Querschnittskontur auf. Ein trapezförmiger Abschnitt 17 wie bei dem Ausführungsbeispiel gemäß Fig. 1 entfällt. Die Lichteintrittsfläche 11 und die Lichtaustrittsfläche 12 sind außerdem geradlinig ausgebildet. Der Abstand zwischen der Leuchtdiode 22 bzw. einem LED-Streifen und dem Lichtlenkelement 10 ist ebenfalls an den Abstrahlwinkel der Leuchtdiode 22 angepasst, so dass das von der Leuchtdiode 22 abgestrahlte Licht nahezu vollständig in das Lichtlenkelement 10 eingekoppelt wird.

Wie anhand der Lichtstrahlen S gemäß Fig. 2 erkennbar ist, erfolgt bei dem Ausführungsbeispiel gemäß Fig. 2 keine gezielte Bündelung der Lichtstrahlen beim Eintritt in das Lichtlenkelement 10. Zwar tritt eine Brechung auf; eine gezielte Bündelung im Sinne eines Sammellinseneffekts ist jedoch nicht vorgesehen.

Die Lichtstrahlen S verlaufen teilweise bis an Seitenflächen 14 des Lichtlenkelements 10. An den Seitenflächen 14 tritt eine Totalreflexion ein, so dass die Lichtstrahlen S einen Richtungswechsel vornehmen. Im Bereich der Lichtaustrittsfläche 12 erfolgt wiederum eine Brechung der Lichtstrahlen aufgrund der unterschiedlichen Brechungsindizes der angrenzenden Medien, wobei wegen des vorangegangenen Richtungswechsels einiger Lichtstrahlen S eine Streuung des Lichts erzeugt wird. Die Lichtaustrittsfläche 12 weist überdies eine Wellenstruktur 13 auf, deren Wellen 13a sich im Wesentlichen orthogonal zu einer Längserstreckung des Lichtlenkelements 10, also im Wesentlichen entlang der Zeichenebene in den Fig. 1 und 2, erstrecken. Auf die Wellenstruktur 13 wird nachfolgend unter Bezugnahme auf Fig. 3 näher eingegangen.

Bei beiden Ausführungsbeispielen gemäß Fig. 1 und 2 ist zudem erkennbar, dass am Lichtlenkelement 10 entlang der Seitenflächen 14, die bei dem Ausführungsbeispiel gemäß Fig. 1 im Bereich des rechteckförmigen Abschnitts 18 angeordnet sind, Positionierkonturen 15 ausgebildet sind. Die Positionierkonturen 15 sind gemeinsam mit dem Lichtlenkelement 10 vorzugsweise einstückig ausgebildet. Insbesondere kann das Lichtlenkelement 10 einstückig aus einem flexiblen Material, insbesondere einem optischen Silikon, hergestellt sein. Das Lichtlenkelement 10 kann insbesondere durch ein Silikongießverfahren oder Spritzgießverfahren hergestellt werden.

Die Positionierkonturen 15 sind im Wesentlichen durch jeweils eine Rippe gebildet, die an jeder Seitenfläche 14 angeordnet ist. Die Rippe erstreckt sich vorzugsweise über die gesamte Länge des Lichtlenkelements. Dabei weist jede Rippe bzw. jede Positionierkontur 15 einen gleichbleibenden Abstand zur Lichtaustrittsfläche 12 auf. Im Leuchtengehäuse 20 sind entsprechend komplementäre Haltekonturen, insbesondere Haltenuten vorgesehen, in welche die Positionierkonturen 15 des Lichtlenkelements 10 eingreifen, um eine genaue Positionierung und feste Verankerung des Lichtlenkelements 10 im Leuchtengehäuse 20 zu erreichen.

Die Wellenstruktur 13 an der Lichtaustrittsfläche 12 ist in Fig. 3 im Längsschnitt dargestellt. Insbesondere ist in Fig. 3 ein Ausschnitt eines Längsschnitts durch das Lichtlenkelement 10 gezeigt, wobei der Längsschnitt entlang der Längserstreckung des Lichtlenkelements 10 verläuft. Es ist erkennbar, dass das Lichtlenkelement 10 an der Lichtaustrittsfläche 12 eine Wellenstruktur 13 mit Wellen 13a und dazwischen angeordneten Wellentälern 13b aufweist. Die Wellen 13a und Wellentäler 13b verlaufen orthogonal zur Längserstreckung des Lichtlenkelements 10, also im Wesentlichen senkrecht zur Zeichenebene in Fig. 3. In Längsrichtung des Lichtlenkelements 10, d.h. in der Zeichenebene in Fig. 3, wechseln sich Wellen 13a und Wellentäler 13b regelmäßig ab. Mit anderen Worten sind die Wellen 13a regelmäßig entlang des Lichtlenkelements 10 angeordnet.

Die Krümmung und der Abstand der Wellen 13a ist vorzugsweise an die jeweilige Abstrahlcharakteristik der verwendeten Leuchtdioden 22, die Dimensionen des Lichtlenkelements 10 und/oder den Grad einer Wölbung der Lichtaustrittsfläche 12 angepasst, um den gewünschten Effekt zu erzielen. Insbesondere wird mit der Wellenstruktur 13 ein Blendeffekt reduziert, der bei Leuchten mit einem LED-Streifen oft in Erscheinung tritt.

Wie anhand der in Fig. 3 illustrierten Lichtstrahlen S erkennbar ist, bewirkt die Wellenstruktur 13 eine unterschiedliche Ablenkung der einzelnen Lichtstrahlen S, so dass sich die Lichtstrahlen außerhalb des Lichtlenkelements 10 mehrfach kreuzen. Damit wird einerseits erreicht, dass das Licht, welches das Lichtlenkelement 10 verlässt, einen gewissen diffusen Anteil aufweist. Andererseits wird durch die Geometrie des Lichtlenkelements 10 gemäß Fig. 1 oder 2 dem Licht dennoch eine Richtung vorgegeben, so dass eine gezielte, ggf. spotartige, Ausleuchtung einer Fläche bewirkt werden kann. Der diffuse Anteil, der durch die Wellenstruktur 13 erzeugt wird, bewirkt außerdem, dass die einzelnen Leuchtdioden 22, die hinter dem Lichtlenkelement 10 angeordnet sind, als einzelne Lichtpunkte nicht mehr erkennbar sind. Dies erweckt für einen Betrachter den Eindruck, als ob im Leuchtengehäuse 20 eine flächige, im Wesentlichen streifenförmige bzw. bandförmige, Lichtquelle vorliegt.

In diesem Zusammenhang wird darauf hingewiesen, dass nicht die Lichtaustrittfläche 12, sondern alternativ oder zusätzlich auch die Lichteintrittsfläche 11 eine Wellenstruktur 13 aufweisen kann. Dies gilt für alle Ausführungsbeispiele der Erfindung. So kann das Lichtlenkelement 10 insbesondere bei dem Ausführungsbeispiel gemäß Fig. 4 im Wesentlichen um 180° verdreht in die Längsnut 21 eingesetzt sein, so dass die Wellenstruktur 13 den Leuchtdioden 22 zugewandt ist und eine Lichteintrittsfläche 11 bildet. Die Lichtaustrittsfläche 12 kann in diesem Fall glatt ausgebildet oder ebenfalls mit einer Wellenstruktur 13 versehen sein.

Die konstruktive Gestaltung eines bevorzugten Ausführungsbeispiels der erfindungsgemäßen Leuchte ist gut anhand des Querschnitts gemäß Fig. 4 zu erkennen. Im Wesentlichen weist das Leuchtengehäuse 20 bei diesem Ausführungsbeispiel eine H-förmige Querschnittskontur mit einem Mittelsteg 28 auf, von welchem sich beidseitig jeweils zwei Seitenwände 27 erstrecken. Die Seitenwände 27 begrenzen eine Längsnut 21. Das Ausführungsbeispiel gemäß Fig. 4 zeigt die bevorzugte Variante einer Hängeleuchte, welche beidseitig lichtabstrahlend gestaltet ist. Insbesondere ist eine Lichtabstrahlung nach oben und nach unten vorgesehen. Es ist auch möglich, anstelle einer H-förmigen Querschnittskontur des Leuchtengehäuses 20 eine U-förmige Querschnittskontur einzusetzen. Dies ist für eine Deckenleuchte zweckmäßig, die lediglich in eine Richtung, vorzugsweise nach unten, abstrahlt.

Jede Längsnut 21 des Leuchtengehäuses 20 weist vorzugsweise in einem dem Mittelsteg 28 zugewandten Bereich einen Elektronikraum 24 auf. Im Elektronikraum 24 verlaufen Leitungen und Platinen, die zur Ansteuerung der Leuchtdioden 22 vorgesehen sind. Die Leuchtdioden 22 sind vorzugsweise auf einem Leuchtmittelträger 25 angeordnet, der sich durch die Längsnut 21 erstreckt. Insbesondere ist der Leuchtmittelträger 25 zwischen die Seitenwände 27 eingespannt. Der Leuchtmittelträger 25 kann dabei auf einer Abstufung der Längsnut 21 aufliegen. Auf dem Leuchtmittelträger 25 sind mehrere Leuchtdioden 22 in Reihe hintereinander angeordnet, so dass sie einen LED-Streifen bilden.

Die den Leuchtdioden 22 zugewandte Oberfläche des Leuchtmittelträgers 25 kann vorzugsweise eine Bodenfläche 21a der Längsnut 21 bilden. Als Bodenfläche 21a wird im Rahmen dieser Anmeldung diejenige Fläche in der Längsnut 21 bezeichnet, die nach Entfernen des Lichtlenkelements 10 als Boden für einen Betrachter erkennbar ist. Insofern kann die Bodenfläche 21a auch durch den Mittelsteg 28 definiert sein, sofern der Leuchtmittelträger 25 transparent ist. Jedenfalls ist vorgesehen, dass die Bodenfläche 21a mit einer lichtabsorbierenden Schicht ausgestattet bzw. lichtabsorbierend ausgebildet ist. Beispielsweise kann die Bodenfläche 21a als schwarze Fläche ausgebildet sein. Wenn der Leuchtmittelträger 25 die Bodenfläche 21a definiert, kann insbesondere der Leuchtmittelträger 25 eine schwarze Fläche bilden, die den Leuchtdioden 22 zugewandt ist.

Die Seitenwände 27 des Leuchtengehäuses 20 bilden zu den Leuchtdioden 22 hingewandte Wandfläche 21b, die zumindest teilweise ebenfalls mit einer lichtabsorbierenden Schicht ausgestattet sein können. Alternativ können die Wandflächen 21b auch selbst lichtabsorbierend ausgebildet sein.

Im Abstand vom Leuchtmittelträger 25, insbesondere beabstandet von den Leuchtdioden 22, ist in jeder der Längsnuten 21 jeweils ein Lichtlenkelement 10 angeordnet. Zwischen dem Lichtlenkelement 10 und dem Leuchtmittelträger 25 ist jeweils ein Luftspalt 26 vorgesehen. Zumindest im Bereich des Luftspalts 26 können die Wandflächen 21 lichtabsorbierend gestaltet sein. Es ist überdies möglich, die Wandflächen 21b auch im Bereich der Lichtlenkelemente 10 lichtabsorbierend auszustatten, um den Effekt der Totalreflexion zu unterstützen.

Wie in Fig. 4 gut erkennbar ist, ist der Luftspalt 26 in den beiden Längsnuten 21 unterschiedlich groß ausgebildet. Die Lichtlenkelemente 10 weisen hingegen dieselbe Querschnittskontur auf. Durch die Änderung des Abstands zwischen dem Leuchtmittelträger 25 und dem Lichtlenkelement 10, also mit der Änderung der Luftspaltgröße, kann die Breite des abgestrahlten Lichtkegels variiert werden. So kann es vorteilhaft sein, für die Ausleuchtung einer Tischfläche, d.h. bei einer Abstrahlung nach unten, eine größere Lichtkegelbreite als für eine Abstrahlung nach oben, d.h. zur Decke hin, vorzusehen.

In diesem Zusammenhang wird darauf hingewiesen, dass der Begriff "Lichtkegel" wegen der Längserstreckung des Lichtlenkelements 10 nicht wörtlich, sondern sinngemäß zu verstehen ist. Das Lichtlenkelement 10 in Kombination mit dem LED-Streifen erzeugt tatsächlich einen Lichtstreifen.

Wie in Fig. 4 außerdem gut erkennbar ist, schließen die Lichtlenkelemente 10 jeweils mit den Endflächen der Seitenwände 27 des Leuchtengehäuses 20 ab. Insbesondere schließen die Wellen 13a mit den Seitenwänden 27 ab. Mit anderen Worten überragen die Wellen 13a die Seitenwände 27 vorzugsweise nicht.

In der Draufsicht gemäß Fig. 5 ist die Leuchte ohne ein Lichtlenkelement 10 erkennbar. Dadurch wird der Blick auf die Leuchtdioden 22 frei, die in Reihe hintereinander angeordnet sind. Die mehreren Leuchtdioden 22 bilden im Wesentlichen einen LED-Streifen. Zu Zwecken der einfacheren Montage ist außerdem vorgesehen, dass die Leuchtdioden 22 jeweils zu mehreren LED-Modulen 29 zusammengefasst sind. Die mehreren LED-Module 29 sind vorzugsweise als teilkreisförmige Bögen ausgebildet und werden zu der als offener Ring geformten Leuchte kombiniert.

Fig. 5 zeigt außerdem deutlich, dass die Leuchtdioden 22 möglichst dicht gepackt in Reihe angeordnet sind und so einen nahezu durchgängigen LED-Streifen bilden. Dabei kann bevorzugt vorgesehen sein, dass jede zweite Leuchtdiode 22 dieselbe Farbtemperatur aufweist. Mit anderen Worten können die Leuchtdioden 22 einerseits Leuchtdioden 22a mit einer ersten Farbtemperatur und andererseits Leuchtdioden 22b mit einer zweiten Farbtemperatur aufweisen. Die Leuchtdioden 22a, 22b mit unterschiedlicher Farbtemperatur sind jeweils abwechselnd zueinander angeordnet.

Die Leuchtdioden 22, 22a, 22b sind stufenlos dimmbar. Ferner sind die Leuchtdioden 22, 22a, 22b mit einer Steuereinheit gekoppelt, die es ermöglicht, die Leuchtdioden 22a mit der ersten Farbtemperatur und die Leuchtdioden 22b mit der zweiten Farbtemperatur so wechselweise zu dimmen, dass eine stufenlose Farbtemperaturänderung möglich ist. So kann die Farbtemperatur des aus dem Lichtlenkelement 10 austretenden Lichts beispielsweise von Kaltweiß zu Warmweiß stufenlos eingestellt werden. Vorzugsweise beträgt der Farbtemperaturbereich, der stufenlos einstellbar ist, mindestens 1000 Kelvin, vorzugsweise 1300 Kelvin. Dabei kann ein oberer Wert für die Farbtemperatur 4000 Kelvin und ein unterer Wert für die Farbtemperatur 2700 Kelvin betragen.

Konkret kann vorgesehen sein, dass einerseits Leuchtdioden 22a mit einer Farbtemperatur von 2700 Kelvin und andererseits Leuchtdioden 22b mit einer Farbtemperatur von 4000 Kelvin abwechselnd zueinander in Reihe innerhalb der Längsrinne 21 angeordnet sind. Für die Einstellung einer Farbtemperatur des abgestrahlten Lichts von 2700 Kelvin werden die Leuchtdioden 22 so angesteuert, dass die Leuchtdioden 22b mit der Farbtemperatur von 4000 Kelvin ausgeschaltet und die Leuchtdioden 22a mit der Farbtemperatur von 2700 Kelvin eingeschaltet sind. Wenn nun die Leuchtdioden 22b mit der Farbtemperatur von 4000 Kelvin heller gedimmt und gleichzeitig die Leuchtdioden 22a mit der Farbtemperatur von 2700 Kelvin dunkler gedimmt werden, so verschiebt sich die Gesamtfarbtemperatur des aus dem Lichtlenkelement 10 austretenden Lichts in Richtung Kaltweiß. Diese Farbtemperaturänderung kann mittels der Steuereinheit entweder durch eine Benutzereingabe oder anhand von Umgebungsbedingungen, beispielsweise der Zeit oder des Umgebungslichts, einstellbar sein. Beispielsweise kann die Steuereinheit so konfiguriert sein, dass sich die Farbtemperatur des aus dem Lichtlenkelement 10 abgestrahlten Lichts anhand des Tagesverlaufs ändert.

Die Steuereinheit ermöglicht es nicht nur, die Leuchtdioden 22, 22a, 22b wechselweise zu dimmen, um die Farbtemperatur einzustellen. Vielmehr können die Leuchtdioden 22a mit der ersten Farbtemperatur und die Leuchtdioden 22b mit der zweiten Farbtemperatur auch gleichzeitig gedimmt werden, um die Lichtintensität einzustellen. Dies ist ebenfalls durch Benutzereingabe oder durch vorgegebene Programmierung möglich.

Fig. 6 zeigt eine Untersicht der Leuchte gemäß Fig. 5, wobei das Lichtlenkelement 10 eingesetzt ist. Gut erkennbar ist die Wellenstruktur 13 mit den querverlaufenden Wellen 13a. Außerdem ist eine Lichtdurchgangsöffnung 16 im Lichtlenkelement 10 zu sehen. Die Lichtdurchgangsöffnung 16 ist vorzugsweise in der Nähe des Spalts 30 angeordnet, der die Längsenden des Leuchtengehäuses 20 trennt. Die Lichtdurchgangsöffnung 16 ist im Wesentlich oval ausgebildet und dient als Sensoröffnung für einen Infrarotsensor (nicht dargestellt).

Der Infrarotsensor ist vorzugsweise auf dem Leuchtmittelträger 25 angeordnet und ermöglicht eine berührungslose Steuerung der Leuchte. Ein Benutzer kann auf diese Weise durch bloßes Eingreifen in den Sensorbereich des Infrarotsensors verschiedene Funktionen der Leuchte betätigen. Beispielsweise kann die Leuchte auf diese Weise berührungsfrei gedimmt werden. Bei einer Hängeleuchte kann darüber hinaus vorteilhaft eine Lichtintensitätsverteilung zwischen der Abstrahlung nach unten und der Abstrahlung nach oben einstellbar sein. Ferner kann mittels der berührungslosen Sensorsteuerung die Farbtemperatur angepasst werden.

Im Wesentlichen wird damit eine Gestensteuerung ermöglicht, wobei die Gesten im Wesentlichen durch unterschiedlich lange zeitliche Einwirkung auf den Infrarotsensor bestimmt sind. So kann ein kurzes "Hineinwinken" in den Infrarotsensorbereich ein Ein- oder Ausschalten der Leuchte bewirken. Ein längeres Eingreifen in den Sensorbereich kann hingegen die Farbtemperaturänderung initiieren. Eine Dimmung der Lichtintensität kann beispielsweise durch doppeltes Eingreifen in den Sensorbereich in vorbestimmtem zeitlichem Abstand eingeleitet werden. Ferner kann vorgesehen sein, dass mehrere Infrarotsensoren in dem Leuchtengehäuse 22 angeordnet sind, so dass durch unterschiedliche Kombinationen von Einwirkaktionen und Einwirkzeit auf mehrere Infrarotsensoren die Anzahl der mittels Gestensteuerung einstellbaren Funktionen erhöht werden kann.

### Bezugszeichenliste

- 10: Lichtlenkelement
- 11: Lichteintrittsfläche
- 12: Lichtaustrittsfläche
- 13: Wellenstruktur
- 13a: Welle
- 13b: Wellental
- 14: Seitenfläche
- 15: Positionierkontur
- 16: Durchgangsöffnung
- 17: Trapezförmiger Abschnitt
- 18: Rechteckförmiger Abschnitt
- 20: Leuchtengehäuse
- 21: Längsnut
- 21a: Bodenfläche
- 21b: Wandfläche
- 22: Leuchtdiode
- 22a: Leuchtdiode mit erster Farbtemperatur
- 22b: Leuchtdiode mit zweiter Farbtemperatur
- 23: Haltekontur
- 24: Elektronikraum
- 25: Leuchtmittelträger
- 26: Luftspalt
- 27: Seitenwand
- 28: Mittelsteg
- 29: LED-Modul
- 30: Spalt

## Patentansprüche

1. Innen- oder Außenleuchte, insbesondere Decken- oder Hängeleuchte, mit einem Leuchtengehäuse (20), das wenigstens eine Längsnut (21) aufweist, in die mehrere in Reihe angeordnete Leuchtdioden (22) und ein Lichtlenkelement (10) aufgenommen sind, welches sich über die Leuchtdioden (22) erstreckt, wobei das Lichtlenkelement (10) eine den Leuchtdioden (22) zugewandte Lichteintrittsfläche (11) sowie eine Lichtaustrittsfläche (12) aufweist,
**dadurch gekennzeichnet, dass**
die Lichteintrittsfläche (11) und/oder die Lichtaustrittsfläche (12) eine Wellenstruktur (13) mit regelmäßig angeordneten Wellen (13a) umfasst, die sich parallel zueinander und orthogonal zur Längsnut (21) erstrecken, wobei die Längsnut (21) eine Bodenfläche (21a) und zwei Wandflächen (21b) aufweist, wobei
a. die Bodenfläche (21a) unterhalb der Leuchtdioden und/oder
b. die Wandflächen (21b) zumindest unterhalb des Lichtlenkelements (10) mit einer lichtabsorbierenden, insbesondere schwarzen, Schicht ausgestattet sind.

2. Innen- oder Außenleuchte nach Anspruch 1,
**dadurch gekennzeichnet, dass**
die Wellenstruktur (13) so dimensioniert ist, dass der Lichtschwerpunkt einzelner Leuchtdioden (22) exzentrisch verschoben ist.

3. Innen- oder Außenleuchte nach Anspruch 1 oder 2,
**dadurch gekennzeichnet, dass**
das Lichtlenkelement (10) von den Leuchtdioden (22) beabstandet angeordnet ist derart, dass über die Lichteintrittsfläche (11) eingekoppeltes Licht an Seitenflächen (14) des Lichtlenkelements (10) totalreflektiert wird.

4. Innen- oder Außenleuchte nach einem der vorhergehenden Ansprüche, **dadurch gekennzeichnet, dass**
die Lichteintrittsfläche und/oder die Lichtaustrittfläche (12) eine linsenförmige, insbesondere lichtbündelnde, Wölbung aufweist, deren Krümmungsachse parallel zur Längsnut (21) ausgerichtet ist.

5. Innen- oder Außenleuchte nach einem der vorhergehenden Ansprüche, **dadurch gekennzeichnet, dass**
das Lichtlenkelement (10) in die Längsnut (21) des Leuchtengehäuses (20) eingepasst ist.

6. Innen- oder Außenleuchte nach einem der vorhergehenden Ansprüche, **dadurch gekennzeichnet, dass**
das Lichtlenkelement (10) seitlich, insbesondere an den Seitenflächen (14), jeweils eine Positionierkontur (15) aufweist, die formschlüssig mit einer Haltekontur (23) des Leuchtengehäuses (20) verbunden oder verbindbar ist.

7. Innen- oder Außenleuchte nach einem der vorhergehenden Ansprüche, **dadurch gekennzeichnet, dass**
das Lichtlenkelement (10) aus einem flexiblen Material, insbesondere einem optischen Silikon, gebildet ist.

8. Innen- oder Außenleuchte nach einem der vorhergehenden Ansprüche, **dadurch gekennzeichnet, dass**
mehrere Leuchtdioden (22a) mit einer ersten Farbtemperatur und mehrere Leuchtdioden (22b) mit einer zweiten Farbtemperatur vorgesehen sind, die jeweils abwechselnd in Reihe zueinander angeordnet derart, dass sich deren Lichtkegel überlappen.

9. Innen- oder Außenleuchte nach einem der vorhergehenden Ansprüche, **dadurch gekennzeichnet, dass**
in der Längsnut (21) ein Infrarotsensor angeordnet ist und das Lichtlenkelement (10) eine Durchgangsöffnung (16) aufweist, die mit dem Infrarotsensor fluchtet.

10. Innen- oder Außenleuchte nach Anspruch 9,
**dadurch gekennzeichnet, dass**
der Infrarotsensor und die Leuchtdioden (22) mit einer Steuereinrichtung gekoppelt sind, die so konfiguriert ist, dass die Farbtemperatur und/oder die Intensität des aus dem Lichtlenkelement (10) ausgekoppelten Lichts berührungslos einstellbar ist.

11. Innen- oder Außenleuchte nach Anspruch 10,
**dadurch gekennzeichnet, dass**
die Steuereinrichtung so konfiguriert ist, dass durch Dimmen der Leuchtdioden die Farbtemperatur und/oder die Intensität des aus dem Lichtlenkelement (10) ausgekoppelten Lichts stufenlos änderbar ist.

12. Innen- oder Außenleuchte nach einem der vorhergehenden Ansprüche, **dadurch gekennzeichnet, dass**
das Leuchtengehäuse (20) ein H-förmiges Querschnittsprofil mit zwei gegenüberliegenden Längsnuten (21) aufweist.

13. Innen- oder Außenleuchte nach Anspruch 12,
**dadurch gekennzeichnet, dass**
die Längsnuten (21) jeweils mehrere Leuchtdioden (22) und jeweils ein Lichtlenkelement (10) aufnehmen derart, dass eine Lichtabstrahlung in unterschiedliche, insbesondere um 180° versetzte, Richtungen erfolgt.

14. Innen- oder Außenleuchte nach einem der vorhergehenden Ansprüche, **dadurch gekennzeichnet, dass**
das Leuchtengehäuse (10) als geöffneter Ring oder als gerader Balken ausgebildet ist.

## Claims

1. An internal or external light, in particular a ceiling or hanging light, with a light housing (20) which has at least one longitudinal groove (21) in which multiple light-emitting diodes (22) and one light-guiding element (10), which extends beyond the light-emitting diodes (22), are accomodated, wherein the light-guiding element (10) has a light entry surface (11) facing the light-emitting diodes (22) and a light-emitting surface (12), **characterized in that** the light entry surface (11) and/or the light-emitting surface (12) comprise(s) a corrugated structure (13) with regularly arranged ridges (13a) which extend parallel to each other and orthogonally to the longitudinal groove (21), wherein the longitudinal groove (21) has a bottom surface (21a) and two wall surfaces (21b), wherein
a. the bottom surface (21a) is equipped with a light-absorbing, in particular black, layer below the light-emitting diodes, and/or
b. the wall surfaces (21b) are equipped with such a layer at least below the light-guiding element (10) .

2. The internal or external light according to Claim 1, **characterized in that** the corrugated structure (13) is dimensioned such that the lighting focal point of individual light-emitting diodes (22) is shifted off-centre.

3. The internal or external light according to Claim 1 or 2, **characterized in that** the light-guiding element (10) is arranged at a distance to the light-emitting diodes (22) such that light entering via the light entry surface (11) is completely reflected to side surfaces (14) of the light-guiding element (10).

4. The internal or external light according to any one of the preceding claims, **characterized in that** the light entry surface and/or the light-emitting surface (12) has a lens-shaped, in particular light-focusing, curvature, the curvature axis of which is aligned parallel to the longitudinal groove (21).

5. The internal or external light according to any one of the preceding claims, **characterized in that** the light-guiding element (10) is fitted into the longitudinal groove (21) of the light housing (20).

6. The internal or external light according to any one of the preceding claims, **characterized in that** the light-guiding element (10) has respective lateral positioning contours (15), in particular on the side surfaces (14), which positioning contours (15) are, or can be, positively connected with a mounting contour (23) of the light housing (20).

7. The internal or external light according to any one of the preceding claims, **characterized in that** the light-guiding element (10) is formed from a flexible material, in particular an optical silicone.

8. The internal or external lamp according to any one of the preceding claims, **characterized in that** multiple light-emitting diodes (22a) with a first color temperature and multiple light-emitting diodes (22b) with a second color temperature are provided, which respectively are arranged alternately adjacent to each other such that their light cones overlap.

9. The internal or external light according to any one of the preceding claims, **characterized in that** an infrared sensor is arranged in the longitudinal groove (21), and **in that** the light-guiding element (10) has a passage opening (16) which is aligned with the infrared sensor.

10. The internal or external light according to Claim 9, **characterized in that** the infrared sensor and the light-emitting diodes (22) are coupled with a control device configured such that the color temperature and/or the intensity of the light emitted by the light-guiding element (10) is adjustable in a contact-free manner.

11. The internal or external light according to Claim 10, **characterized in that** the control device is configured such that the color temperature and/or the intensity of the light emitted by the light-guiding element (10) can be adjusted continuously by dimming the light-emitting diodes.

12. The internal or external light according to any one of the preceding claims, **characterized in that** the light housing (20) has an H-shaped cross-sectional profile with two opposing longitudinal grooves (21).

13. The internal or external light according to Claim 12, **characterized in that** each respective longitudinal groove (21) accommodates multiple light-emitting diodes (22) and one respective light-guiding element (10) such that light is emitted in different directions, in particular in directions offset by 180°.

14. The internal or external light according to any one of the preceding claims, **characterized in that** the light housing (10) is designed as an open ring or as a straight bar.

## Revendications

1. Luminaire interne ou externe, en particulier luminaire de plafond ou à suspendre, comportant un boîtier de luminaire (20) qui présente au moins une rainure longitudinale (21) dans laquelle sont reçu au-dessus des s plusieurs diodes électroluminescentes (22) disposées en rangée et un élément d'orientation de lumière (10) qui s'étend sur les diodes électroluminescentes (22), l'élément d'orientation de lumière (10) présentant une surface d'entrée de lumière (11) tournée vers les diodes électroluminescentes (22) et une surface de sortie de lumière (12),
**caractérisé en ce que**
la surface d'entrée de lumière (11) et/ou la surface de sortie de lumière (12) comprend une structure ondulée (13) comportant des ondulations disposées régulièrement (13a) qui s'étendent parallèlement les unes aux autres et orthogonalement par rapport à la rainure longitudinale (21), la rainure longitudinale (21) présentant une surface de sol (21a) et deux surfaces murales (21b),
a. la surface de sol (21a) étant équipée, en-dessous des diodes électroluminescentes, et/ou
b. les surfaces murales (21b), du moins en dessous de l'élément d'orientation de lumière (10), d'une couche absorbant la lumière, en particulier noire.

2. Luminaire interne ou externe selon la revendication 1, **caractérisé en ce que**
la structure ondulée (13) est dimensionnée de manière à ce que le centre de gravité lumineux des différents diodes électroluminescentes (22) soit décalé de manière excentrée.

3. Luminaire interne ou externe selon la revendication 1 ou 2,
**caractérisé en ce que**
l'élément d'orientation de lumière (10) est disposé espacé des diodes électroluminescentes (22) de manière à ce que de la lumière incorporée par la surface d'entrée de lumière (11) soit totalement réfléchie au niveau des surfaces latérales (14) de l'élément d'orientation de lumière (10).

4. Luminaire interne ou externe selon une des revendications précédentes,
**caractérisé en ce que**
la surface d'entrée de lumière et/ou la surface de sortie de lumière (12) présente un bombement en forme de lentille, en particulier regroupant la lumière en faisceau, dont l'axe de courbure est orienté parallèlement à la rainure longitudinale (21).

5. Luminaire interne ou externe selon une des revendications précédentes,
**caractérisé en ce que**
l'élément d'orientation de lumière (10) est ajusté dans la rainure longitudinale (21) du boîtier de luminaire (20).

6. Luminaire interne ou externe selon une des revendications précédentes,
**caractérisé en ce que**
l'élément d'orientation de lumière (10) présente latéralement, en particulier au niveau des surfaces latérales (14), respectivement un contour de positionnement (15) qui est connecté ou connectable en correspondance géométrique à un contour de retenue (23) du boîtier de luminaire (20).

7. Luminaire interne ou externe selon une des revendications précédentes,
**caractérisé en ce que**
l'élément d'orientation de lumière (10) est composé d'un matériau souple, en particulier un silicone optique.

8. Luminaire interne ou externe selon une des revendications précédentes,
**caractérisé en ce**
**qu'**il est prévu plusieurs diodes électroluminescentes (22a) dotées d'une première température de couleur et plusieurs diodes électroluminescentes (22b) dotées d'une seconde température de couleur, qui sont disposés respectivement alternativement en rangée les unes par rapport aux autres de manière à ce que leurs cônes lumineux se chevauchent.

9. Luminaire interne ou externe selon une des revendications précédentes,
**caractérisé en ce que**,
dans la rainure longitudinale (21), est disposé un capteur infrarouge et que l'élément d'orientation de lumière (10) présente un orifice traversant (16) qui est aligné avec le capteur infrarouge.

10. Luminaire interne ou externe selon la revendication 9, **caractérisé en ce que**
le capteur infrarouge et les diodes électroluminescentes (22) sont couplés à un dispositif de commande qui est configuré de manière à ce que la température de couleur et/ou l'intensité de la lumière découplée à partir de l'élément d'orientation de lumière (10) soit modifiable progressivement.

11. Luminaire interne ou externe selon la revendication 10,
**caractérisé en ce que**
le dispositif de commande est configuré de manière à ce que, par une modulation des diodes électroluminescentes, la température de couleur et/ou l'intensité de la lumière découplée depuis l'élément d'orientation de lumière (10) soit modifiable progressivement.

12. Luminaire interne ou externe selon une des revendications précédentes,
**caractérisé en ce que**
le boîtier de luminaire (20) présente un profil de section transversale en forme de H avec deux rainures longitudinales opposées (21).

13. Luminaire interne ou externe selon la revendication 12,
**caractérisé en ce que**
les rainures longitudinales (21) reçoivent respectivement plusieurs diodes électroluminescentes (22) et respectivement un élément d'orientation de lumière (10) de manière à ce qu'une irradiation lumineuse ait lieu dans des sens différents, en particulier décalés de 180°.

14. Luminaire interne ou externe selon une des revendications précédentes,
**caractérisé en ce que**
le boîtier de luminaire (10) est réalisé sous forme d'un anneau ouvert ou d'une poutre droite.
